# EUROPÄISCHE PATENTSCHRIFT

(11) **EP 1 750 475 B1**
(45) Veröffentlichungstag und Bekanntmachung des Hinweises auf die Patenterteilung: **21.09.2011**
(21) Anmeldenummer: 06014839.2
(22) Anmeldetag: 17.07.2006
(51) Int. Cl.: H04Q 9/00

(54) **Datenübertragungssystem und Verfahren zum Betreiben eines Datenübertragungssystems**
Data transmission system and method for operating a data transmission system
Système de transmission de données et procédé de fonctionnement d'un système de transmission de données

(30) Priorität: 02.08.2005 DE 102005036255
(43) Veröffentlichungstag der Anmeldung: 07.02.2007
(73) Patentinhaber: Prof. Dr. Horst Ziegler und Partner GbR, 33100 Paderborn (DE)
(72) Erfinder: Ziegler, Horst, Prof. Dr., 33100 Paderborn (DE)
(74) Vertreter: Tiesmeyer, Johannes

(56) Entgegenhaltungen:
- EP-A2- 1 028 403
- EP-A2- 1 037 185
- EBNER A ET AL: "Decentralized slot synchronization in highly dynamic ad hoc networks" WIRELESS PERSONAL MULTIMEDIA COMMUNICATIONS, 2002. THE 5TH INTERNATION AL SYMPOSIUM ON OCT. 27-30, 2002, PISCATAWAY, NJ, USA,IEEE, Bd. 2, 27. Oktober 2002 (2002-10-27), Seiten 494-498, XP010619137 ISBN: 978-0-7803-7442-3

## Beschreibung

Die Erfindung betrifft ein Datenübertragungssystem umfassend ein Datenübertragungsnetz mit primären Datensendern, die dazu eingerichtet sind, in bestimmten Sendezeitintervallen entsprechend der Zeitvorgabe durch eine jeweilige eigene Zeitbasis Daten einschließlich Kennungsinformationen zu ihrer Identifizierung zu senden, und mit primären Datenempfängern, die jeweils primären Datensendern zum Empfang der davon gesendeten Daten zugeordnet - und in der Weise gesteuert sind, dass sie jeweils in bestimmten Empfangszeitintervallen, die mit den Sendezeitintervallen der ihnen zugeordneten primären Datensender zusammenfallen sollen, empfangsbereit geschaltet sind und wobei die primären Datenempfänger ferner dazu eingerichtet sind, von den primären Datensendern empfangene Daten oder daraus abgeleitete Daten an wenigstens eine weitere Komponente des Datenübertragungsnetzes weiterzusenden, um sie unmittelbar durch diese weitere Netzkomponente oder ggf. im Wege der Übermittlung durch zusätzliche Netzkomponenten einer zentralen Datensammelstation zuzuführen, wobei das Empfangszeitschema eines jeweiligen primären Datenempfängers und dessen Zuordnung zu Datensendern durch Empfangsanforderungsinformationen von einer zur Empfangsanforderung autorisierten Netzkomponente änderbar ist.

Der Erfinder beschäftigt sich mit der Integration eines derartigen Datenübertragungssystems in ein Verbrauchsdatenerfassungssystem, bei dem Verbrauchsmessgeräte oder Verbrauchszähler, wie beispielswiese elektrische Heizkostenverteiler, Warmwasserzähler, Wärmemengenzähler, Gaszähler, Stromzähler oder dgl., an betreffenden Verbrauchsstellen, z.B. in Wohnungen vorgesehen sind.

Die Funkablesung von Verbrauchszählern ist eine zunehmend mehr genutzte Möglichkeit, die Verbrauchsmengeninformationen zur verbrauchsabhängigen Abrechnung ohne Betreten der betreffenden Wohnungen zu erhalten. Voraussetzung für eine flächendeckende Einführung der Funkablesung sind aber sehr niedrige Geräte-Mehrkosten für "funkablesbare Verbrauchsmessgeräte" im Vergleich zu konventionellen Verbrauchsmessgeräten mit Direktablesung durch Ablesepersonal. Diesbezüglich kommt eine nur unidirektionale Funkdatenübertragung von den Verbrauchsmessgeräten zu einem oder ggf. mehreren Empfängern in Frage, da Hochfrequenzsender schaltungstechnisch wesentlich einfacher und daher kostengünstiger zu realisieren sind als empfindliche Empfänger bzw. bidirektionale Funkeinrichtungen an Verbrauchszählern.

Verbrauchsdatenerfassungssysteme mit Verbrauchszählern, welche Funksender zur unidirektionalen übermittlung von Verbrauchswertinformationen an einen oder mehrere Empfänger aufweisen, sind bekannt. Oft sind Wohnanlagen so groß, dass ein einziger primärer Empfänger nicht ausreicht, um von sämtlichen in der Wohnanlage verteilt installierten primären Sendern der Verbrauchszähler die betreffenden Verbrauchsdaten zu erfassen. Ferner können in betreffenden Wohnanlagen die funktechnischen Verhältnisse so ungünstig sein, dass nicht alle primären Datensender der Verbrauchszähler direkt an einen einer Datensammelstation unmittelbar zugeordneten primären Empfänger senden können.

In großen Wohnanlagen, bei denen ein Verbrauchsdatenerfassungssystem der hier betrachteten Art durchaus mehrere Hundert Verbrauchszähler umfassen kann, erfolgt die automatische Funkauslesung normalerweise mit einer Vielzahl von primären Funkempfängern mit Sendefunktion, wobei einem primären Funkempfänger z.B. 10 - 20 Verbrauchszähler zugeordnet sein können. Die Funkempfänger sind in ein Datenübertragungsfunknetz eingebunden, dessen Netztopologie entsprechend den Übertragungsbedingungen eingerichtet wird. Bei optimalen Funkbedingungen kann jeder der primären Sender ggf. direkt an eine zentrale Datensammelstation oder Verwaltungsstation senden, wobei das Funknetz dann Sterntopologie haben kann. Falls eine unmittelbare Verbindung zwischen sämtlichen primären Sendern und der Datensammelstation nicht gelingt und somit Netzkomponenten eingesetzt werden müssen, welche als Relaisstationen Daten weitersenden, so wird das Funknetz eine baumartige Topologie haben. Die Qualität des Funkkontaktes eines primären Senders zur zentralen Datensammelstation (Master-Netzkomponente) kann von festen Gegebenheiten abhängen, z.B. von in der Verbindungslinie stehenden Hindernissen. Änderungen der Qualität der Funkverbindungen zwischen Netzkomponenten des Datenübertragungsfunknetzes können auch vorübergehender Art sein und z.B. durch Änderung von Türstellungen, Platzierung großer Gegenstände in Wohnungen usw. verursacht sein. Funkstrecken können auch durch Mehrwegeinterferenzen zeitlich veränderlich sein, so dass oft schon kleine Änderungen innerhalb eines Gebäudes dazu führen können, dass bisher gute Funkstrecken und damit Sender-Empfänger-Paare nicht mehr zuverlässig funktionieren, wohingegen früher nicht funktionierende Sender-Empfänger-Paarungen nun plötzlich eine hinreichend gute Funkübertragungsqualität aufweisen.

Aus der EP 1 037 185 A2 ist ein Datenübertragungssystem der eingangs genannten Art bekannt, welches als Verbrauchsdatenerfassungssystem nutzbar ist und ein sogenanntes intelligentes Funknetz umfasst, bei dem die Zuordnung eines jeweiligen Verbrauchszählers als Endgerät mit einem primären Datensender zu einem jeweiligen primären Empfänger mit Sendefunktion von einer zentralen Master-Netzkomponente (Verwaltungsstation) aus organisiert und auch verändert werden kann. Die Datenübertragung zwischen den unidirektional sendenden primären Sendern der Verbrauchszähler und den bidirektional sendenden und empfangenden primären Empfängern sowie weiteren Netzkomponenten erfolgt in Zeitsegmenten, wobei den verschiedenen Netzkomponenten einschließlich den primären Empfängern gewisse Zeitschlitze zugeordnet werden, in welchen ihnen der zur Datenübertragung verwendete gemeinsame Funkkanal ausschließlich zur Verfügung gestellt wird. Diese Zeitschlitze (Zeitintervalle) bilden zusammen einen Zeitschlitzblock. Für die Netzkomponenten unterschiedlicher Hierarchien werden Zeitschlitzblöcke unterschiedlicher Hierarchien vorgesehen. Die Gesamtheit der Zeitschlitzblöcke unterschiedlicher Hierarchie bilden zusammen ein Zeitsegment. Diese Art der Organisation der Datenübertragung ermöglicht es, die verschiedenen Netzkomponenten nur für genau vorgegebene kurze Zeitspannen für ein Senden von Daten bzw. ein Empfangen von Daten zu aktivieren. Diese Aktivierungszeiten sind verglichen mit der Gesamtlänge eines Zeitsegments sehr kurz. Aufgrund dieser zeitlichen Organisation des Datenübertragungsbetriebs im Funknetz werden die Netzkomponenten jeweils nur kurzzeitig in den betreffenden Zeitschlitzblöcken aktiviert, so dass der mittlere Strombedarf jeder Netzkomponente äußerst gering gehalten werden kann. Dies ermöglicht es, als Stromquellen für die Netzkomponenten und auch für die primären Datensender Langzeitbatterien zu verwenden, wodurch aufwendige Kabelinstallationen für die Stromversorgung der Netzkomponenten entbehrlich sind. Im Rahmen der Funkinbetriebnahme wird jedem Empfänger eine Liste der von ihm zu empfangenden primären Sender zugeordnet. Bei den hier betrachteten Systemen ist es häufig so, dass in Sendereichweite der einzelnen primären Sender mehrere primäre Empfänger bzw. sonstige empfangsfähige Netzkomponenten liegen und somit prinzipiell Daten von den betreffenden Sendern empfangen könnten. Die Zuordnung von primären Sendern zu primären Empfängern erfolgt oft danach, welcher der primären Empfänger das Sendesignal des jeweiligen primären Senders am stärksten empfangen kann. Weiteres Zuordnungskriterium könnte sein, dass den einzelnen primären Empfängern möglichst gleich viele primäre Sender zugeordnet sein sollten, damit eine möglichst gleichmäßige Auslastung der Empfänger gewährleistet ist.

Bei dem Datenübertragungssystem nach der EP 1 037 185 A2 ist es möglich, die Zuordnung zwischen primären Sendern und Empfängern von der zentralen Master-Komponente aus zu ändern, so dass die Daten eines primären Senders nunmehr über einen anderen Primärempfänger und damit über eine andere Übertragungsstrecke in dem Funknetz zu einer Zentralstation übermittelt werden. Mit einer solchen Änderung der Zuordnung kann z.B. der Situation begegnet werden, dass eine ursprünglich gut funktionierende Übertragungsstrecke zwischen einem primären Sender und einem primären Empfänger plötzlich nicht mehr ausreichend funktioniert und eine redundante Übertragungsstrecke nunmehr eine zuverlässigere Datenübermittlung ermöglicht, wobei der betreffende primäre Sender dann einem dieser alternativen Datenübertragungsstrecke zugehörigen primären Empfänger zugeordnet wird.

Das Datenübertragungssystem nach der EP 1 037 185 A2 funktioniert zuverlässig und erlaubt die Einbindung einer relativ großen Anzahl an Netzkomponenten und somit auch einer relativ großen Anzahl an Endgeräten mit Primärsendern in das Funknetz.

Aus der EP 1 028 403 A2 ist ein Datenübertragungssystem bekannt, bei dem bei fester Zuordnung zwischen einem jeweiligen Primärsender eines Endgerätes und einem Empfänger von der Möglichkeit der präziseren Abschätzung des Zeitpunktes der nächsten Datensendung vom Sender zum Empfänger Gebrauch gemacht wird. Dabei wird folgendem Umstand Rechnung getragen. Jeder der Sender und auch der Empfänger haben jeweils einen eigenen Zeitgeber mit einer eigenen Zeitbasis, die üblicherweise von einem preiswerten Uhrenschwingquarz gebildet wird. Aufgrund von Fertigungstoleranzen der eingesetzten Uhrenschwingquarze und vor allem aufgrund der starken Temperaturabhängigkeit der Frequenz der Uhrenschwingquarze kann es dazu kommen, dass die Zeitgeber untereinander unterschiedlichen Gang aufweisen. Der Temperatureffekt auf die Zeitgeberfrequenz kann insbesondere bei elektronischen Heizkostenverteilern, Warmwasserzählern und Wärmemengenzählern, die Umgebungstemperaturen von bis zu 80° ausgesetzt sein können, Probleme bereiten, da die instantane Zeitgeberfrequenz und erst recht die daraus akkumulierte Zeit nach Maßgabe der Temperaturschwankungen variieren kann. Gesamtfrequenztoleranzen von ca. 100 ppm sind dabei durchaus möglich. Bei einem mittleren Sendeabstand von ca. fünf Stunden (bei fünf Sendungen pro Tag) bedeutet dies eine Zeitunsicherheit von ca. +/- 2 Sekunden. Berücksichtigt man noch, dass auch die Temperatur der zeitbestimmenden Elemente des Empfängers schwanken kann, so kann sich die Zeitunsicherheit zwischen dem Zeitsystem eines jeweiligen Senders und dem Zeitsystem des Empfängers noch weiter erhöhen, beispielsweise auf +/- 3 Sekunden. Um ein zu einem bestimmten Zeitpunkt erwartetes Datenpaket von einem Sender mit großer Wahrscheinlichkeit empfangen zu können, ist es daher erforderlich, den Empfänger während eines Toleranzzeitintervalls um den vermuteten Zeitpunkt herum empfangsbereit zu halten. Trifft das Datentelegramm bzw. Datenpaket in diesem Toleranzzeitintervall ein, so kann die Zeitzählung empfängerseitig auf den Eintreffzeitpunkt des Datenpakets neu bezogen werden und somit relativ zum Sender resynchronisiert werden. Auf diese Weise kann eine Akkumulation des Zeitfehlers verhindert werden. Bei dem Datenübertragungssystem nach der EP 1 028 403 A2 weist der jeweilige Empfänger eine Zeitsteuereinrichtung zur zeitlichen Steuerung seines Empfangsbetriebs auf, die auf der Basis von Sollwerten für die Zeitabstände aufeinander folgender Datenpakete des betreffenden Senders den jeweiligen Zeitpunkt der erwarteten nächstsen Datensendung abschätzt, d.h. kalkuliert, und den Empfänger zeitweilig jeweils in einem Toleranzzeitintervall, das den geschätzten Zeitpunkt enthält, empfangsbereit schaltet. Zur Abschätzung des Zeitpunktes der nächsten Datensendung korrigiert die Zeitsteuereinrichtung den jeweiligen aktuellen Sollwert für den Zeitabstand von der letzten Datensendung zur erwarteten nächsten Datensendung mit einem Korrekturfaktor entsprechend dem Quotienten aus dem tatsächlichen Zeitabstand vom vorletzten zum letzten erfolgreichen Datenempfang und dem entsprechenden Sollwert-Zeitabstand. Eine solche Korrektur ermöglicht es, die Dauer des Toleranzzeitintervalls vergleichsweise kurz einzustellen und dennoch mit großer Wahrscheinlichkeit sicherzustellen, dass es mit dem Sendezeitintervall des Senders überlappt und somit ein erfolgreicher Datenempfang möglich ist.

Die Betriebsweise des Datenübertragungssystems nach der EP 1 028 403 A2 macht den effektiven Empfang jeweils folgender Endgerätetelegramme eines Senders von vorausgegangenen Empfangszeitpunkten abhängig, so dass im Falle einer Änderung der Zuordnung zwischen Sender und Empfänger der neue Empfänger erst nach einem aufwendigen Zeitsuchverfahren in der Lage ist, Datentelegramme von dem Sender in entsprechend kurzen Empfangszeitintevallen zu empfangen. Während dieser Zeitsuchverfahren ist es normalerweise erforderlich, den Empfänger über längere Zeitintervalle empfangsbereit zu schalten, damit er ein Datentelegramm erfolgreich vom Sender erstmalig empfängt. Batterieschonender Betrieb ist somit während der Durchführung des Zeitsuchverfahrens nicht in der gewünschten Weise möglich.

Der vorliegenden Erfindung liegt die Aufgabe zugrunde, ein Datenübertragungssystem und ein Verfahren zum Betreiben eines Datenübertragungssystems der eingangs genannten Art bereitzustellen, welches in einem Datenübertragungsnetz die Möglichkeit der Änderung der Zuordnung zwischen Sendern und Empfängern ermöglicht, ohne auf eine empfangszeitoptimierte Abschätzung des Zeitpunktes der nächsten Datensendung des Senders oder ggf. eines anderen Übertragungsparameters für den diesem Sender neu zugeordneten Empfänger verzichten zu müssen.

Zur Lösung dieser Aufgabe wird vorgeschlagen, das Datenübertragungssystem der eingangs genannten Art derart zu gestalten, dass die primären Datenempfänger dazu eingerichtet sind, nach Maßgabe der Zeitvorgabe durch eine eigene Zeitbasis, d.h. in ihrem eigenen Zeitsystem, die jeweilige Zeit des Empfangs von Daten von einem betreffenden primären Datensender zu messen und die gemessenen Zeitinformationen oder daraus abgeleitete Zeitinformationen in Zuordnung zu Kennungsinformationen des primären Datensenders über wenigstens einen Übertragungsweg des Datenübertragungsnetzes an eine zur Empfangsanforderung autorisierte Netzkomponente zu senden, wobei die zur Empfangsanforderung autorisierte Netzkomponente dazu eingerichtet ist, das Senden solcher Empfangsanforderungsinformationen an einen jeweiligen primären Datenempfänger zu veranlassen, die in Zuordnung zu Kennungsinformationen des primären Datensenders, von dem der betreffende primäre Datenempfänger Daten empfangen soll, Zeitinformationen für die Festlegung eines korrigierten Empfangszeitintervalls enthalten, die auf den bei vorausgegangener Übertragung von Daten von dem primären Datensender zu einem jeweiligen primären Datenempfänger von letzterem gemessenen Zeitinformationen oder daraus abgeleiteten Zeitinformationen beruhen.

Der primäre Datenempfänger empfängt somit seine Daten von dem ihm zunächst zugeordneten primären Datensender, wobei er in seinem eigenen Zeitsystem die Zeit des Datenempfangs registriert. Gemäß einer Variante des Datenübertragungssystems nach der Erfindung kalkuliert der primäre Datenempfänger den erwarteten nächsten Datensendezeitpunkt des primären Datensenders auf der Basis des ihm bekannten Soll-Zeitschemas der Sendezeitpunkte und auf der Basis einer Korrektur nach Maßgabe von vorher gemessenen Zeitinformationen über einen oder mehrere vorausgegangene Sendezeitpunkte und gibt diesen kalkulierten Erwartungswert für den folgenden Sendezeitpunkt des primären Senders an die zur Empfangsanforderung autorisierte Netzkomponente weiter. Sollte diese Netzkomponente nun aufgrund eines verschiedene Übertragungsbedingungen im Netz berücksichtigenden Programms eine Änderung der Zuordnung des primären Senders zu einem primären Empfänger veranlassen und somit entsprechende Anforderungsinformationen an den neuen primären Datenempfänger zu senden, so enthalten diese Empfangsanforderungsinformationen auch die korrigierten Informationen über den erwarteten Sendezeitpunkt des primären Senders, so dass das Empfangszeitintervall des neuen primären Datenempfängers bereits optimal kurz gehalten ist. Aufwendige Zeitsuchverfahren sind somit beim Wechsel der Zordnung zwischen primären Datensendern und primären Datenempfängern nicht erforderlich.

Gemäß einer anderen Variante des Datenübertragungssystems nach der Erfindung misst der betreffende primäre Datenempfänger den Zeitpunkt des Datenempfangs und ggf. die Dauer des Datenempfangs und überträgt diese Zeitmesswerte zu der zur Empfangsanforderung autorisierten Netzkomponente, bei der es sich z.B. um eine zentrale Master-Netzkomponente oder um eine entfernte, an das Netz angebundene Verwaltungs- und Datenverarbeitungsstation handeln kann, welche auf der Basis der gemessenen Sendezeitwerte und des bekannten Zeitschemas des Sendebetriebs des betreffenden primären Datensenders den Zeitpunkt der erwarteten nächsten Datensendung kalkuliert und mit Empfangsanforderungsinformationen an den zum nächsten Datenempfang von dem primären Datensender bestimmten primären Datenempfänger über das Datenübertragungsnetz übermittelt.

Die jeweiligen primären Datenempfänger erhalten somit stets auch Informationen über den erwarteten nächsten Sendezeitpunkt des ihnen zugeordneten Datensenders, wobei diese Zeitpunkte des erwarteten Datenempfangs korrigiert sind auf der Basis von Messwerten vorausgegangener Sendeereignisse des betreffenden primären Datensenders. Gemäß der vorliegenden Erfindung kann somit einerseits von einem Datenübertragungsnetz der in der EP 1 037 185 A2 erläuterten Art Gebrauch gemacht werden und andererseits eine effiziente Empfangszeitabschätzung, wie sie z.B. in der EP 1 028 403 A2 erläutert ist, benutzt werden, und zwar ohne Unterbrechung auch bei Wechsel der Zuordnung zwischen einem primären Datensender und einem betreffenden primären Datenempfänger.

Bei den bisherigen Überlegungen wurde vorausgesetzt, dass die primären Datenempfänger hinreichend gut synchronisierte Zeitgeber aufweisen. Sollte dies nicht der Fall sein, so ist dafür Sorge zu tragen, dass eine Synchronisation der Netzkomponenten erfolgen kann, z.B. durch Synchronisationsinformationen von einer Master-Netzkomponente.

Vorzugsweise ist das Datenübertragungsnetz ein Funknetz, bei dem sich die Netzkomponenten einen Funkkanal teilen.

Vorzugsweise sind die primären Datenempfänger dazu eingerichtet, zusätzlich zu der Zeit der Datenübertragung von einem primären Datensender zu einem betreffenden primären Datenempfänger wenigstens einen weiteren bei der Datenübertragung verwendeten Datenübertragungsparameter zu messen und die Messinformation oder daraus abgeleitete Informationen zum Zwecke der korrigierten Abschätzung eines Erwartungswertes dieses Datenübertragungsparameters beim nächsten Sendeereignis des primären Senders über wenigstens einen Übertragungsweg des Datenübertragungsnetzes an eine zur Empfangsanforderung autorisierte Netzkomponente in Zuordnung zu Kennungsinformationen des primären Datensenders zu senden, wobei die zur Empfangsanforderung autorisierte Netzkomponente dazu eingerichtet ist, das Senden solcher Empfangsanforderungsinformationen an einen jeweiligen primären Datenempfänger zu veranlassen, die in Zuordnung zu Kennungsinformationen des primären Datensenders, von dem der betreffende primäre Datenempfänger gemäß der Empfangsanforderung Daten empfangen soll, korrigierte Informationen über den betreffenden Datenübertragungsparameter enthalten, der bei vorausgegangener Übertragung von Daten von dem primären Datensender zu einem jeweiligen primären Datenempfänger von letzterem gemessen wurde, und dass die primären Datenempfänger dazu eingerichtet sind, die mit den Empfangsanforderungsinformationen erhaltenen Informationen über Datenübertragungsparameter zur Einstellung der betreffenden Datenübertragungsparameter auszuwerten.

Bei diesen weiteren Datenübertragungsparametern kann es sich z.B. um die Empfangsfrequenz, die Empfangsfeldstärke oder etwa um einen Modulationsparameter, wie die Modulationstaktrate, den Modulationshub oder die Modulationsart (z.B. Frequenzmodulation oder Amplitudenmodulation) des empfangenen Signals handeln. Auch in diesem Fall wird ein verbesserter Schätzwert für den betreffenden Datenübertragungsparameter in die Empfangsanforderungsinformationen einbezogen, wobei dieser Schätzwert von dem Messwert dieses Datenübertragungsparameters bei einer vorausgegangenen Datenübertragung abhängt.

Wie etwa bei dem Funknetz nach der EP 1 037 185 A2 ist es auch bei dem Datenübertragungssystem nach der vorliegenden Erfindung in einer bevorzugten Ausführungsform vorgesehen, dass die primären Datensender unidirektional sendende Funksender ohne Empfangsfunktion sind, wobei es sich um batteriebetriebene Sender handelt. Auch die bidirektional funktionierenden, also mit Sendeeinrichtung und Empfangseinrichtung ausgestatteten Primärempfänger sowie etwaige weitere Netzkomponenten sind vorzugsweise batteriebetriebene Geräte.

Vorzugsweise ist das Datenübertragungssystem in ein Verbrauchsdatenerfassungssystem mit mehreren Verbrauchsmessgeräten einbezogen, wobei die Verbrauchsmessgeräte mit den primären Datensendern ausgerüstet sind und wobei die primären Datensender dazu eingerichtet sind, Verbrauchsmessdaten ihrer Verbrauchsmessgeräte in Zuordnung zu Kennungsdaten zur Identifizierung der Verbrauchsmessgeräte zu senden.

Besondere Vorteile ergeben sich, wenn gemäß einer weiteren bevorzugten Ausführungsform der Erfindung das Kommunikationsmanagement des Datenübertragungsnetzes einschließlich der Erstellung der Empfangsanforderungsinformationen und der Berechnung der Einstellwerte der Datenübertragungsparameter auf der Basis der von den primären Empfängern erhaltenen Istwertinformationen in einer zentralen Datenverarbeitungs- und Netzsteuerungsstation abgewickelt wird. Bei einer solchen Zentralisierung aller wesentlichen Daten bzw. Managementaufgaben in einer zentralen Datenverarbeitungs- und Netzsteuerungsstation können primäre Empfänger und sonstige Relaiskomponenten des Netzes verwendet werden, an die keine hohen Anforderungen an Prozessor-, Speicher- und Batteriekapazität gestellt werden müssen. Ferner können diese Netzkomponenten mit Software geringer Komplexität betrieben werden. Lediglich die zentrale Datenverarbeitungs- und Netzsteuerungsstation ist mit aufwendigerer Hardware und Software auszustatten. Dies erleichtert schließlich auch die Wartung des Systems und verringert die Fehleranfälligkeit des Datenübertragungssystems.

Gegenstand der Erfindung ist ferner ein Verfahren zum Betreiben eines Datenübertragungssystems umfassend ein Datenübertragungsnetz, insbesondere Funknetz, mit primären Datensendern, primären Datenempfängern mit Sendefunktion, die mittels Steuerungsinformationen über das Datenübertragungsnetz steuerbar sind, und weitere Netzkomponentem mit Sende- und Empfangsfunktion, wobei das Verfahren folgende Schritte umfasst:
a) Senden von Daten mittels der primären Datensender in jeweils den primären Datensendern zugeordneten Sendezeitintervallen, wobei die Daten Kennungsinformationen zur Identifizierung der sie sendenden Datensender umfassen,
b) Zuordnen wenigstens eines primären Datensenders zu einem jeweiligen primären Datenempfänger, indem dem primären Datenempfänger von einer zur Empfangsanforderung autorisierten Netzkomponente Empfangsanforderungsinformationen übermittelt werden, welche zusätzlich zu einer Kennungsinformation zur Identifizierung des betreffenden primären Datensenders Informationen zur Einstellung wenigstens eines vom primären Datenempfänger einzustellenden Datenübertragungsparameters enthalten, wobei die Informationen zur Einstellung des Datenübertragungsparameters oder zumindest Basisdaten zu ihrer Erstellung zuvor durch Messung des Istwertes des Datenübertragungsparameters während einer vorausgegangenen Datenübertragung von dem primären Datensender zu einem primären Datenempfänger von letzterem gewonnen und der zur Empfangsanforderung autorisierten Netzkomponente über das Datenübertragungsnetz übermittelt wurden,
c) Einstellen des Datenübertragungsparameters bei dem jeweiligen primären Datenempfänger, welchem die betreffenden Empfangsanforderungsinformationen gemäß Schritt b) übermittelt wurden und Aktivieren der Empfangsbereitschaft des primären Datenempfängers mit der Einstellung des Datenübertragungsparameters in einem Empfangszeitintervall, das mit einem erwarteten folgenden Sendezeitintervall des zugeordneten primären Datensenders zusammenfällt, um Daten von dem primären Datensender zu empfangen, sowie Messen des Istwertes des Datenübertragungsparameters beim Datenempfang vom primären Datenempfänger,
d) Übermittlung der von dem primären Datensender empfangenen Daten vom primären Datenempfänger über das Datenübertragungsnetz an eine zentrale Datensammelstation und Übermittlung des gemessenen Istwertes des Datenübertragungsparameters oder ggf. eines auf der Basis dieses Istwertes vom primären Empfänger berechneten Einstellwertes des Datenübertragungsparameters vom primären Datenempfänger zu der zur Empfangsanforderung autorisierten Netzkomponente und
e) Erstellen von Empfangsanforderungsinformationen für eine etwaige neue Zuordnung des primären Datensenders zu einem primären Datenempfänger durch die zur Empfangsanforderung autorisierte Netzkomponente unter Berücksichtigung des Istwertes des Datenübertragungsparameters oder ggf. des auf der Basis des Istwertes berechneten Einstellwertes des Datenübertragungsparameters.

Das Verfahren ermöglicht somit eine verbesserte Abschätzung der Datenübertragungsparameter auf der Basis vorausgegangener Messwerte und der Einstellung dieser korrigierten Erwartungswerte bei dem betreffenden primären Datenempfänger für den folgenden Datenempfang vom zugeordneten primären Datensender.

Der Datenübertragungsparameter kann z.B. die Empfangszeit oder/und die Empfangsfrequenz oder/und die Empfangsfeldstärke oder/und die Empfangsbandbreite oder/und ein Modulationsparameter beim Signalempfang des primären Datenempfängers vom primären Datensender sein.

Die Netzkomponenten, insbesondere die primären Datenempfänger sollten zeitlich synchronisiert sein. Auch ein Frequenzabgleich der primären Datenempfänger ist zu empfehlen.

Die zentrale Datensammelstation und die zur Empfangsanforderung autorisierte Netzkomponente sind vorzugsweise in einer Datenverarbeitungs- und Netzsteuerungsstation vereinigt, über welche das Kommunikationsmanagement des Datenübertragungsnetzes einschließlich der Erstellung der Empfangsanforderungsinformationen und der Berechung der Einstellwerte der Datenübertragungsparameter auf der Basis der von den primären Empfängern erhaltenen Istwertinformationen abgewickelt wird.

Die zentrale Datenverarbeitungs- und Netzsteuerungsstation kann von den übrigen Netzkomponenten entfernt positioniert sein und über Funk oder ggf. Datenleitungen mit diesen Netzkomponenten kommunizieren. Im bevorzugten Fall des Einsatzes des Verfahrens zum Betrieb eines Verbrauchsdatenerfassungssystems kann die Datenverarbeitungs- und Netzsteuerungsstation auch dazu eingerichtet sein, die Verbrauchsabrechnungen durchzuführen und abzuwickeln.

Ein Ausführungsbeispiel der Erfindung wird nachstehend unter Bezugnahme auf die Figuren näher erläutert.
- Fig. 1a: zeigt in schematischer Darstellung ein Datenübertragungsfunknetz eines Datenübertragungssystems nach der Erfindung, wobei prinzipiell nutzbare Funkstrecken durch Linien in Fig. 1a gekennzeichnet sind.
- Fig. 1b: zeigt das Zeitdiagramm eines Kommunikationszyklus des Funknetzes nach Fig. 1a.
- Fig. 2a: zeigt das Funknetz aus Fig. 1a nach Wegfall einer unmittelbaren Funkverbindung zwischen den Elementen 4 und 11.
- Fig. 2b: zeigt das Zeitdiagramm eines Kommunikationszyklus des Funknetzes gemäß Fig. 2a.
- Fig. 3a: zeigt das Funknetz aus Fig. 2a nach Änderung der Zuordnung zwischen Empfängern und Sendern zur Kompensation der nicht mehr existierenden unmittelbaren Verbindung zwischen den Elementen 4 und 11.
- Fig. 3b: zeigt das Zeitdiagramm eines Kommunikationszyklus des Funknetzes nach Fig. 3a.
- Fig. 4: stellt ein Zeitdiagramm der Datenübertragung zwischen einem Sender und einem Empfänger dar, wobei Fig. 4 zur Erläuterung der korrigierten Abschätzung des jeweils nächsten Sendezeitpunktes des Senders dient.

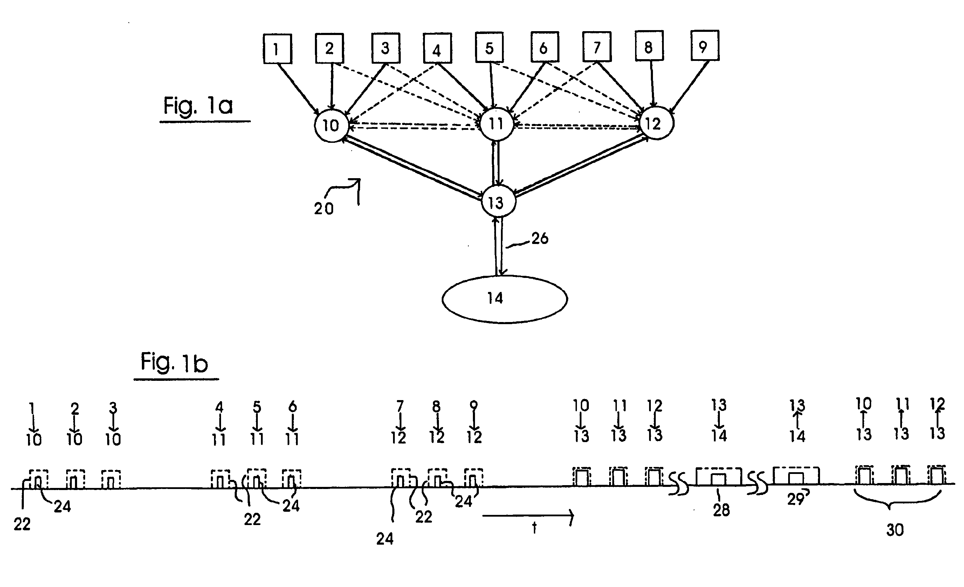

In Fig. 1a sind unidirektional sendende primäre Datensender 1 - 9 dargestellt, bei denen es sich um Verbrauchszähler mit Sendeeinrichtung zur Übermittlung von Verbrauchsmesswerten handelt. Bei den Verbrauchszählern kann es sich z.B. um elektronische Heizkostenerfasser handeln, welche an einem jeweiligen Heizkörper in einer Wohnung angebracht sind. Die Verbrauchsmessgeräte 1 - 9 senden ihre Verbrauchsmessinformationen bzw. ihre Zählerstände mehrmals täglich unidirektional und damit unsynchronisiert.

Die Verbrauchszähler 1 - 9 sind Endgeräte in dem Funknetz 20, welches im Beispielsfall drei primäre Empfänger 10, 11 und 12 mit gleicher Hierarchiestufe in der baumartigen Topologie des Funknetzes aufweist. Die primären Empfänger 10, 11, 12 sind bidirektional funktionierende Geräte mit Sende- und Empfangsmitteln. Die Netzkomponenten 1 - 13 teilen sich jeweils einen Funkkanal.

Wie anhand der durchgezogegenen Linien in Fig. 1 a angedeutet ist, ist den primären Sendern 1 - 3 der Empfänger 10 zugeordnet. Den Sendern 4 - 6 ist der Empfänger 11 zugeordnet. Den Sendern 7 - 9 ist der Empfänger 12 zugeordnet. Diese Zuordnung bedeutet zunächst einmal, dass der betreffende Empfänger nach Maßgabe der Zeitvorgabe eines eigenen Zeitgebers für jeweils kurze Empfangsbereitschaftszeitintervalle in Empfangsbereitschaft übergeht, wenn ein Sendeereignis des zugeordneten primären Senders entsprechend einem bestimmten Sendezeitschema zu erwarten ist.

Die unterbrochenen Linien zwischen primären Sendern 2 - 7 und den primären Empfängern 10, 11, 12 deuten mögliche Funkübertragungswege an, welche jedoch in der momentanen Konfiguration des Funknetzes 20 nicht genutzt werden. Genutzt werden nur die mit durchgezogenen Linien angedeuteten Funkübertragungswege.

Die primären Empfänger 10, 11, 12 können ebenfalls nach einem speziellen Zeitschema bidirektional mit der Master-Netzkomponente 13 kommunizieren. Bei der Master-Netzkomponente 13 handelt es sich ebenfalls um ein Funkgerät mit Sende- und Empfangsmitteln, welches durch Steuerbefehle aus der Netzsteuerungs- und Datenverarbeitungszentrale 14 steuerbar ist.

In Fig. 1b sind die jeweiligen Sende- und Empfangsereignisse des Funknetzes 20 während eines Kommunikationszyklus im Zeitdiagramm schematisch angedeutet. Die vertikalen Pfeile zwischen den Bezugszeichen der jeweils aktiven Netzkomponenten zeigen die jeweilige Richtung der Datenübertragung zwischen den betreffenden Komponenten an. Gestrichelt eingezeichnet sind Empfangsbereitschaftszeitintervalle 22 der betreffenden Empfänger. In den Empfangsbereitschaftszeitintervallen 22 sind mit 24 Zeitintervalle gekennzeichnet, die Sendeereignissen der zugeordneten Sender entsprechen.

Aus Fig. 1b ergibt sich folgende Sequenz. Zunächst empfängt der Primärempfänger 10 nacheinander von den primären Sendern 1, 2, 3 in den Empfangsbereitschaftszeitintervallen 22 Datenpakete 24, welche als Informationen Kenndaten zur Identifizierung des Senders, Zählerstandsinformationen des dem Sender zugehörigen Verbrauchszählers und ggf. Informationen über den nächsten Sendezeitpunkt des Senders enthalten. Die von dem Empfänger 10 empfangenen Datenpakete der primären Sender 1 - 3 werden im Beispielsfall in dem Empfänger 10 zwischengespeichert. Es folgt der Reihe nach die Datenübertragung zwischen den Verbrauchszählern 4 - 6 und dem primären Empfänger 11 mit Speicherung der empfangenen Datenpakete in dem Empfänger 11. Schließlich empfängt der primäre Empfänger 12 der Reihe nach Datenpakete von den Verbrauchszählern 7 - 9. Damit haben sämtliche Verbrauchszähler in dem aktuellen Kommunikationszyklus ihre Informationen übermittelt. Die Empfänger 10, 11, 12 haben in ihrem eigenen Zeitsystem, d.h. auf der Basis ihres eigenen Zeitgebers, den Zeitabstand zwischen dem vorletzten Datenempfang und dem letzten Datenempfang von jedem zugeordneten Verbrauchszähler gemessen und gespeichert. Im weiteren Verlauf des Kommunikationszyklus geben nun die primären Empfänger 10, 11, 12 diese Empfangszeitinformationen zusammen mit den Daten von den Verbrauchsmessgeräten durch Funkübertragung an die Master-Netzkomponente 13 weiter. Die Master-Netzkomponente 13 sammelt diese Informationen in einem Speicher, der von der entfernten Netzsteuerungs- und Datenverarbeitungsstation 14 über den Übertragungskanal 26 ausgelesen werden kann. Der Übertragungskanal 26 kann ein leitungsgebundener Datenübertragungskanal, etwa des öffentlichen Telefon-Festnetzes sein. Vorzugsweise handelt es sich bei dem Datenübertragungskanal 26 um einen Funkübertragungskanal, insbesondere einen GSM- oder UMTS-Kanal, über den die Kommunikation mittels betreffender Modems abzuwickeln ist.

Bei 28 in Fig. 1b ist die Situation angedeutet, dass die Daten von der Master-Netzkomponente 13 zu der Zentrale 14 übermittelt werden. Die Netzsteuerungs- und Datenverarbeitungszentrale 14 kann z.B. die Abrechnungszentrale umfassen, in welcher nach Maßgabe der erhaltenen Verbrauchszählerdaten die Verbrauchsabrechnungen erstellt werden.

Die Zentrale 14 kann anhand der ihr von der Master-Netzkomponente 13 übermittelten Informationen eine Funktionsanalyse des Funknetzes durchführen und Steuerungsbefehle zur Steuerung des Funknetzes 20 erstellen, welche dann zunächst an die Master-Netzkomponente 13 über den Kanal 26 geschickt werden. Die Master-Netzkomponente 13 verteilt dann die betreffenden Befehle an die Netzkomponenten 10, 11 und 12. Dies ist in Fig. 1b bei 30 angedeutet. Die Netzsteuerungsbefehle umfassen insbesondere auch Instruktionen betreffend die Zuordnung von primären Empfängern 10, 11, 12 zu den sendenden Verbrauchszählern 1 - 9 in dem oben schon angesprochenen Sinne. Die Instruktionen umfassen Empfangsanforderungsinformationen und insbesondere Informationen über den Zeitpunkt der erwarteten nächsten Datensendung von dem jeweils zugeordneten Verbrauchszähler.

Bei dem Kommunikationszyklus gemäß Fig. 1b hat alles erwartungsgemäß funktioniert, so dass kein Anlass besteht, die Zuordnung zwischen Verbrauchszählern 1 - 9 und primären Empfängern 10 - 12 gegenüber der Situation gemäß Fig. 1a zu ändern.

Dennoch werden von der Station 14 über die Master-Netzkomponente 13 aktuell kalkulierte Zeitinformationen betreffend die zeitliche Lage und Ausdehnung der jeweiligen Empfangsbereitschaftszeitintervalle 22 übersandt, und zwar in Fig. 1b während der Übertragungsphase 30. Die primären Empfänger 10 - 12 sind dazu eingerichtet, im nächsten Kommunikationszyklus ihre Empfangsbereitschaftszeitintervalle entsprechend einzustellen.

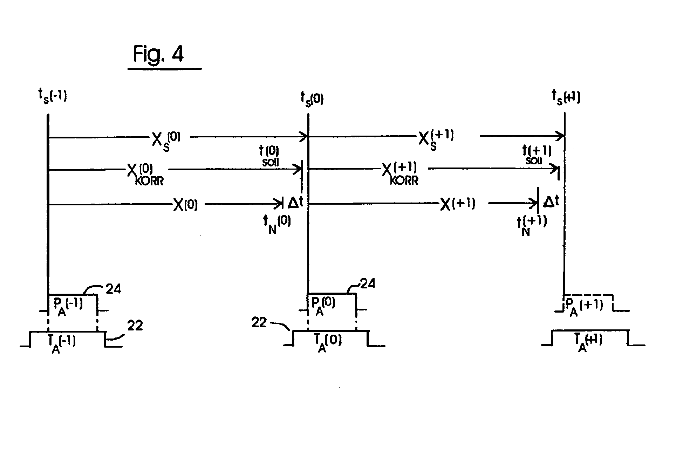

Zur Erläuterung der jeweiligen Kalkulation des Erwartungswertes für den jeweils nächsten Sendezeitpunkt eines betreffenden Senders wird im Folgenden auf Fig. 4 Bezug genommen. In Fig. 4 ist ein Korrekturverfahren illustriert, wie es in der EP 1 028 403 A2 erläutert ist. Fig. 4 ist ein Zeitdiagramm, in dem aufeinander folgende Sendeereignisse (Datenpakete) P_{A} eines Senders, z.B. des sendenden Verbrauchszählers 1 aus Fig. 1a, dargestellt sind, wobei (0) als Index zur Kennzeichnung der Zeiten für das zeitlich letzte Sendeereignis, (-1) als Index für das vorletzte Sendeereignis und (+1) als Index für das erwartete nächstfolgende Sendeereignis steht. t_{N} bezeichnet nominale Empfangszeitpunkte für die betreffenden Datenpakete gemäß einem vorbestimmten oder nach Berechnungsvorschriften stochastisch erzeugten Zeitschema, t_{S} die von t_{N} aufgrund des etwaigen Gangunterschiedes zwischen den Zeitgebern des Senders und des Empfängers abweichenden tatsächlichen Empfangszeitpunkte im Zeitsystem des Empfängers, T_{A} das jeweilige Empfangsbereitschaftszeitintervall des Empfängers, X den empfängerseitig abgeschätzten Zeitabstand vom tatsächlichen Zeitpunkt t_{S} des letzten erfolgreichen Datenempfangs bis zum nächsten Zeitpunkt t_{N}. Das gemäß Fig. 4 zuletzt empfangene Datenpaket P_{A}(0) liegt in dem Zeitfenster (Empfangsbereitschaftszeitintervall) T_{A}(0). Der tatsächliche Empfangszeitpunkt t_{S}(0) (= Beginn des Übertragungszeitintervalls P_{A}(0)) differiert um den Zeitfehler Δt vom berechneten Nominalzeitpunkt t_{N}(0). Der Zeitabstand X(+1) zum erwarteten nächsten Datenpaket P_{A}(+1) wird entsprechend dem Zeitschema ermittelt. Der Beginn dieses Zeitabstandes X(+1) wird empfängerseitig mit dem tatsächlichen Empfangszeitpunkt t_{S}(0) des letzten Datenpaketes P_{A}(0) synchronisiert, so dass das Ende dieses Zeitabstandes X(+1) den nominellen Zeitpunkt t_{N}(+1) für den Beginn der erwarteten nächsten Datenübertragung darstellt. Der Zeitabstand X wird noch mit einem Korrekturfaktor gewichtet, um die Abschätzung des Zeitpunktes t_{S} des tatsächlichen Datenempfangs zu verbessern. Je besser der jeweils folgende Zeitpunkt t_{S} der erwarteten nächsten Datenübertragung abgeschätzt werden kann, umso kleiner kann das zugeordnete Empfangsbereitschaftszeitintervall T_{A} (vgl. 22 in Fig. 1b) eingestellt werden, was bedeutet, dass der Empfänger im Zeitmittel weniger elektrische Energie benötigt und man daher mit vergleichsweise kleinen preiswerten Batterien für die Versorgung des Empfängers auskommt.

In den Korrekturfaktor geht das Verhältnis aus dem tatsächlichen Zeitabstand X_{S}(0) = t_{S}(0) - t_{S}(-1) zu dem nominellen Zeitabstand X(0) = t_{N}(0)-t_{S}(-1) ein. Vorzugsweise entspricht der Korrekturfaktor (K) dem Quotienten aus X_{S} (0) und X(0), so dass der Zeitabstand zum nächsten tatsächlichen Empfangszeitpunkt t_{S}(+1) abgeschätzt wird, indem man X(+1) mit K multipliziert, also X_{KORR}(+1) = X(+1) · X_{S}(0)/X(0) bildet und X_{KORR} zum tatsächlichen Zeitpunkt t_{S}(0) des letzten Datenempfangs hinzuaddiert, um einen verbesserten Schätzwert t_{SOLL}(+1) zu erhalten. Diese Schätzung ist umso besser, je weniger und langsamer die zeittaktbestimmenden Elemente der Zeitgeber des Senders und des Empfängers in ihren Taktfrequenzen schwanken, etwa aufgrund von Temperaturschwankungen.

Diese Korrekturberechnung obliegt im Beispielsfall der Fig. 1a und 1b der Zentrale 14, wobei ihr ja zuvor bereits die erforderlichen Zeitinformationen (insbesondere t_{S}-Informationen) von den betreffenden primären Empfängern 10, 11, 12 über die Master-Netzkomponente 13 zugeführt worden sind.

Für den nächsten Kommunikationszyklus wenden die primären Empfänger 10, 11, 12 somit die korrigierten Empfangsbereitschaftszeitintervalle an, die ihnen mit den Netzsteuerungsinformationen bzw. Empfangsanforderungsinformationen von der Zentrale 14 über die Master-Netzkomponente 13 übermittelt wurden.

Die Master-Netzkomponente 13 sendet auch Netzsynchronisierungssignale an die primären Empfänger 10, 11, 12 aus, um die jeweiligen Zeitgeber der Netzkomponenten 10 - 13 zu synchronisieren.

Es sei angenommen, dass sich nach dem Kommunikationszyklus gemäß Fig. 1b die Funkübertragungsverhältnisse in dem Funknetz 20 partial geändert haben, und zwar in der Weise, dass der primäre Empfänger 11 nicht mehr in der Lage ist, störungsfrei Datenpakete von dem Verbrauchszähler 4 unmittelbar zu empfangen.

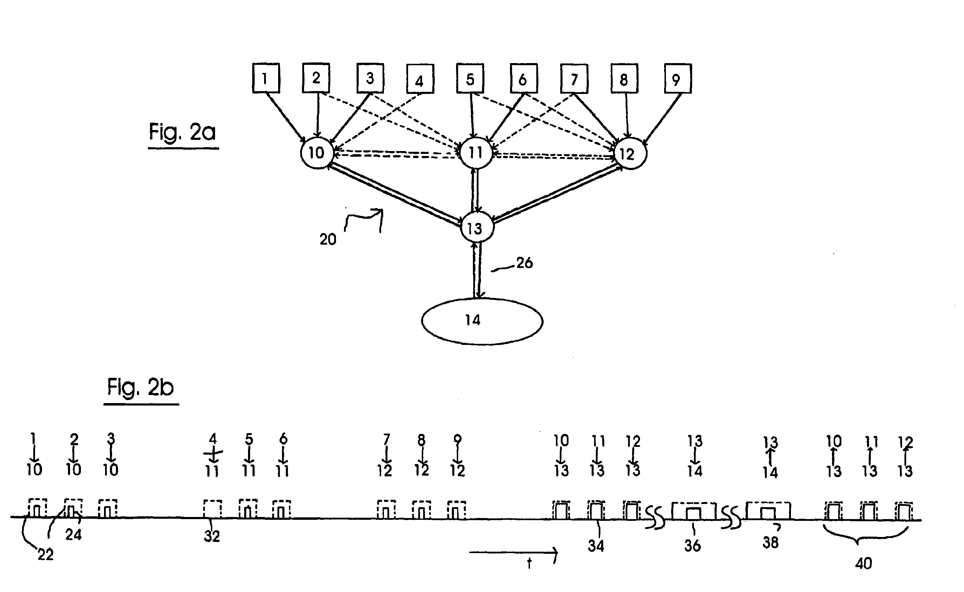

In dem Zeitdiagramm gemäß Fig. 2b fehlt somit in dem bei 32 angedeuteten Empfangsbereitschaftszeitintervall des primären Empfängers das eigentlich erwartete Sendeereignis des Verbrauchszählers 4. Der Empfänger 11 registriert, dass er keinen fehlerfreien Empfang vom Sender 4 hatte und teilt dies bei 34 in Fig. 2b der Master-Netzkomponente 13 mit, welche diese Fehlerinformation bei 36 in Fig. 2b zusammen mit den übrigen gesammelten Daten des aktuellen Kommunikationszyklus an die Zentrale 14 übermittelt. Der Zentrale 14, welcher das Kommunikationsmanagement des Funknetzes 20 obliegt, gibt nun im Zeitbereich 38 in Fig. 2b Netzsteuerbefehle mit betreffenden Empfangsanforderungsinformationen über die Verbindung 26 an die Master-Netzkomponente 13 ab. Im Zeitbereich 40 in Fig. 2b verteilt die Master-Netzkomponente 13 die betreffenden Instruktionen an die Primärempfänger 10, 11, 12. Der Primärempfänger 10 enthält daher Empfangsanforderungsinformationen betreffend den Verbrauchszähler 4, dessen bisherige Funkverbindung zu dem Empfänger 11 hier nicht mehr funktioniert.

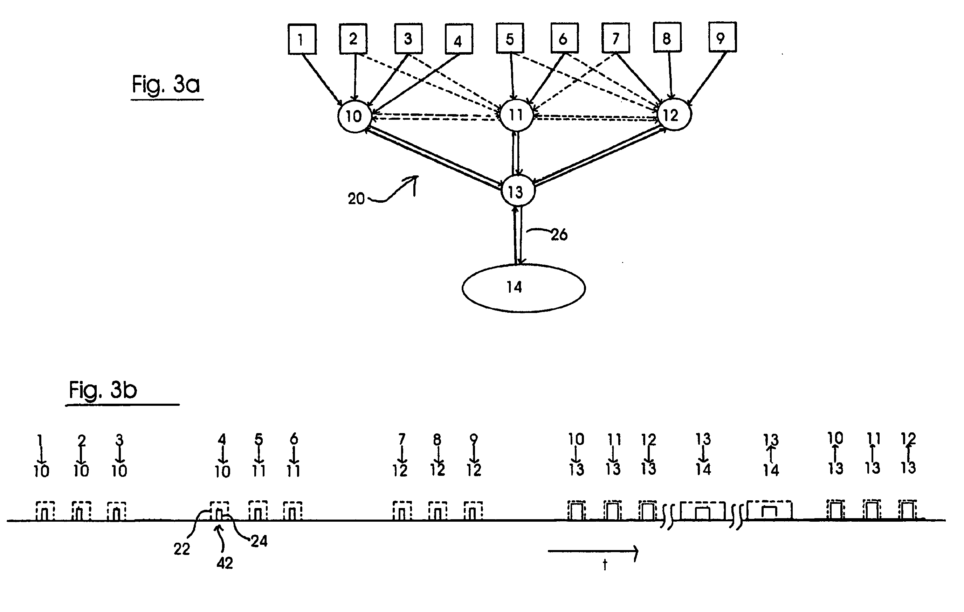

In dem nächsten Kommunikationszyklus des Funknetzes 20 ist dann der primäre Empfänger 10 dem Verbrauchszähler 4 als Empfänger zugeordnet. Diese Situation ist in den Fig. 3a und 3b illustriert. In Fig. 3b ist bei 42 zu erkennen, dass in dem Empfangsbereitschaftszeitintervall 22 des Primärempfängers 10 das Sendeereignis 24 des Verbrauchszählers 4 stattfindet. Bei dem Empfangsbereitschaftszeitintervall 22 handelt es sich um ein hinsichtlich Zeitpunkt und zeitlicher Ausdehnung korrigiertes Zeitfenster, wobei die Korrekturen im Sinne der obigen Erläuterungen zu Fig. 4 auf der Basis von Zeitinformationen ts von der Zentrale 14 vorgenommen wurden. In dem vorliegenden Beispielsfall, in dem zwischen dem Kommunikationszyklus gemäß Fig. 2b und dem Kommunikationszyklus gemäß Fig. 3b keine Information über den Sendezeitpunkt t_{S}(0) des Verbrauchszählers 4 gemessen wurden, hat die Zentrale 14 zur verbesserten Abschätzung des Empfangsbereitschaftszeitintervalls 22 in Fig. 3b zur Korrekturwertermittlung den vorletzten Empfangszeitpunkt t_{S}(-1) und den vorvorletzten Empfangszeitpunnkt ts(-2) berücksichtigt. Ein Beispiel für eine entsprechende Korrekturwertabschätzung findet sich in der EP 1 028 403 A2.

Der vorstehend angenommene Beispielsfall eines Totalausfalls der Funkstrecke zwischen einem Primärsender eines Verbrauchszählers und dem bisher zugeordneten Primärempfänger findet üblicherweise seltener statt als der Fall, dass die Übertragungsqualität lediglich schlechter wird, etwa weil die Empfangsfeldstärke auf ein kritisches Maß absinkt. Ein solcher Fall gibt auch Anlass dazu, dass die Zuordnung zwischen dem Verbrauchszähler und einem primären Empfänger geändert wird. In einem solchen Fall hat die Zentrale 14 jedoch die Informationen über den letzten Sendezeitpunkt t_{S}(0) von dem betreffenden primären Empfänger erhalten, so dass die Korrekturwertermittlung für das Empfangsbereitschaftszeitintervall des neu zuzuordnenden primären Empfängers in dem Sinne vorgenommen werden kann, wie es unter Bezugnahme auf Fig. 4 oben näher erläutert worden ist.

Bei den bisherigen Ausführungsbeispielen wurden die Empfangszeiten t_{S} bei erfolgreichem Datenempfang vom jeweiligen primären Datensender als Datenübertragungsparameter von den betreffenden primären Empfängern 10, 11 bzw. 12 gemessen und zusammen mit den Verbrauchsmessdaten und Gerätekennungsdaten an die zur Empfangsanforderung autorisierte Netzkomponente 14 jeweils weitergeleitet, damit die Zentrale 14 automatisch eine korrigierte Abschätzung für die nächsten Sendezeitpunkte vornehmen und dem jeweiligen primären Empfänger 10, 11 bzw. 12 übermitteln konnte, der dem betreffenden Verbrauchszähler 1 - 9 für den nächsten Kommunikationszyklus zuzuordnen ist.

Dieses Konzept kann auf andere Datenübertragungsparameter und deren verbesserte Abschätzung in Bezug auf das jeweils nächste Sendeereignis eines betreffenden Verbrauchszählers erweitert werden. Bei diesem Datenübertragungsparameter kann es sich z.B. um die Empfangsträgerfrequenz oder/und die Empfangsfeldstärke oder/und um einen Modulationsparameter oder/und um die Empfangsbandbreite handeln. Falls verschiedene Funkkanäle benutzt werden, so kann es sich bei dem Empfangsparameter auch um die Eingabe des Funkkanals handeln. Wichtig ist es jedoch stets, dass Istwerte der betreffenden Datenübertragungsparameter von den primären Empfängern 10 bzw. 11 bzw. 12 erfasst und über das Funknetz zur Verwaltungszentrale 14 weiterleiten.

Alternativ könnte es vorgesehen sein, dass die primären Empfänger 10, 11, 12 jeweils selbst die Korrekturwertberechnungen für die Einstellung des betreffenden Datenübertragungsparameters vornehmen und das Rechenergebnis bereithalten oder ggf. an die Zentrale 14 übermitteln, damit diese bei einer etwaigen Neuzuordnung der Verbrauchszähler zu den primären Empfängern die Empfangsanforderungsinformationen korrekt zusammenstellen kann.

Was das grundsätzliche Zeitschema des Kommunikationsmanagements des Funknetzes 20 anbetrifft, so können quasi-stochastische Methoden zur Festlegung der Sendezeitpunkte zum Einsatz kommen, wie sie z.B. in der EP 1 037 185 A2 und in de EP 1 028 403 A2 angesprochen sind.

Wird das Kommunikationsmanagement entsprechend dem bevorzugten Ausführungsbeispiel der Erfindung im Wesentlichen auf eine Zentrale (hier 14) konzentriert, so kann die Speicher-, Prozessor- und Batteriekapazität der Primärempfänger 10, 11, 12 und ggf. weiterer Netzkomponenten erheblich herabgesetzt werden, so dass preiswertere Netzkomponenten verwendet werden können, die problemlos mit Langzeitbatterien betrieben werden können.

## Patentansprüche

1. Datenübertragungssystem umfassend ein Datenübertragungsnetz (26) mit primären Datensendern (1 ... 9), die dazu eingerichtet sind, in bestimmten Sendezeitintervallen (24) entsprechend der Zeitvorgabe durch eine jeweilige eigene Zeitbasis Daten einschließlich Kennungsinformationen zu ihrer Identifizierung zu senden, und
primären Datenempfängern (10, 11, 12), die jeweils primären Datensendern (1 ... 9) zum Empfang der davon gesendeten Daten zugeordnet- und in der Weise gesteuert sind, dass sie jeweils in bestimmten Empfangszeitintervallen (22), die mit den Sendezeitintervallen (22) der ihnen zugeordneten primären Datensender zusammenfallen sollen, empfangsbereit geschaltet sind und wobei die primären Datenempfänger (10, 11, 12) ferner dazu eingerichtet sind, von den primären Datensendern (1 ... 9) empfangene Daten oder daraus abgeleitete Daten an wenigstens eine weitere Komponente (13) des Datenübertragungsnetzes (20) weiterzusenden, um sie unmittelbar durch-diese weitere Netzkomponente (13) oder ggf. im Wege der Übermittlung durch zusätzliche Netzkomponenten einer zentralen Datensammelstation (14) zuzuführen, wobei das Empfangszeitschema eines jeweiligen primären Datenempfängers (10, 11, 12) und dessen Zuordnung zu Datensendern (1 ... 9) durch Empfangsanforderungsinformationen von einer zur Empfangsanforderung autorisierten Netzkomponente (14) änderbar ist,
**dadurch gekennzeichnet,**
**dass** die primären Datenempfänger (10, 11, 12) dazu eingerichtet sind,
nach Maßgabe der Zeitvorgabe durch eine eigene Zeitbasis die jeweilige Zeit des Empfangs von Daten von einem betreffenden primären Datensender (1 ... 9) zu messen und die gemessenen Zeitinformationen oder daraus abgeleitete Zeitinformationen in Zuordnung zu Kennungsinformationen des primären Datensenders (1 ... 9) über wenigstens einen Übertragungsweg des Datenübertragungsnetzes (20) an eine zur Empfangsanforderung autorisierte Netzkomponente (14) zu senden, und dass die zur Empfangsanforderung autorisierte Netzkomponente (14) dazu eingerichtet ist, das Senden solcher Empfangsanforderungsinformationen an einen jeweiligen primären Datenempfänger (10, 11, 12) zu veranlassen, die in Zuordnung zu Kennungsinformationen des primären Datensenders, von dem der betreffende primäre Datenempfänger (10, 11, 12) Daten empfangen soll, Zeitinformationen für die Festlegung des Empfangszeitintervalls (22) enthalten, die auf den bei vorausgegangener Übertragung von Daten von dem primären Datensender (1...9) zu einem jeweiligen primären Datenempfänger (10, 11, 12) von letzterem gemessenen Zeitinformationen oder daraus abgeleiteten Zeitinformationen beruhen.

2. Datenübertragungssystem nach Anspruch 1, wobei das Datenübertragungsnetz (20) ein Funknetz ist.

3. Datenübertragungssystem nach Anspruch 1 oder 2, wobei die zur Empfangsanforderung autorisierte Netzkomponente eine zentrale Masterkomponente (13, 14) ist.

4. Datenübertragungssystem nach Anspruch 1, 2 oder 3, wobei eine Netzkomponente (13) dazu eingerichtet ist, Synchronisationsinformationen zu senden, um die Zeitgeber der primären Datenempfänger (10, 11, 12) zu synchronisieren.

5. Datenübertragungssystem nach Anspruch 1, 2, 3 oder 4, wobei eine Netzkomponente dazu eingerichtet ist, Frequenzabgleichssteuerungsinformationen zu senden, um die Frequenzgeber der primären Datenempfänger zu synchronisieren.

6. Datenübertragungssystem nach einem der vorhergehenden Ansprüche, wobei die primären Datenempfänger (10, 11, 12) dazu eingerichtet sind, zusätzlich zu der Zeit der Datenübertragung von einem primären Datensender (1 ... 9) zu einem betreffenden primären Datenempfänger (10, 11, 12) wenigstens einen weiteren bei der Datenübertragung verwendeten Datenübertragungsparameter zu messen und die Messinformationen oder daraus abgeleitete Informationen über wenigstens einen Übertragungsweg des Datenübertragungsnetzes an eine zur Empfangsanforderung autorisierte Netzkomponente (14) in Zuordnung zu Kennungsinformationen des primären Datensenders (1 ... 9) zu senden und dass die zur Empfangsanforderung autorisierte Netzkomponente (14) dazu eingerichtet ist, das Senden solcher Empfangsanforderungsinformationen an einen jeweiligen primären Datenempfänger (10, 11, 12) zu veranlassen, die in Zuordnung zu Kennungsinformationen des primären Datensenders (1 ... 9), von dem der betreffende primäre Datenempfänger (10, 11, 12) gemäß der Empfangsanforderung Daten empfangen soll, Informationen über den betreffenden Datenübertragungsparameter enthalten, der bei vorausgegangener Übertragung von Daten von dem primären Datensender (1 ... 9) zu einem jeweiligen primären Datenempfänger (10, 11, 12) von letzterem gemessen wurde, und dass die primären Datenempfänger (10, 11, 12) dazu eingerichtet sind, die mit den Empfangsanforderungsinformationen erhaltenen Informationen über Datenübertragungsparameter zur Einstellung der betreffenden Datenübertragungsparameter auszuwerten.

7. Datenübertragungssystem nach Anspruch 6, wobei es sich bei dem Datenübertragungsparameter um die Empfangsfrequenz, die Empfangsfeldstärke oder einen Modulationsparameter des empfangenen Signals handelt.

8. Datenübertragungssystem nach einem der vorhergehenden Ansprüche, wobei die primären Datensender (1 ... 9) unidirektional sendende Funksender ohne Empfangsfunktion sind.

9. Datenübertragungssystem nach einem der vorhergehenden Ansprüche, wobei es Bestandteil eines Verbrauchsdatenerfassungssystems mit mehreren Verbrauchsmessgeräten ist, wobei die Verbrauchsmessgeräte mit den primären Datensendern (1 ... 9) ausgerüstet sind und wobei die primären Datensender (1 ... 9) dazu eingerichtet sind, Verbrauchsmessdaten ihrer Verbrauchsmessgeräte zu senden.

10. Verfahren zum Betreiben eines Datenübertragungssystems, umfassend ein Datenübertragungsnetz (20), insbesondere Funknetz, mit primären Datensendern (1 ... 9), primären Datenempfängern (10, 11, 12) mit Sendefunktion, die mittels Steuerüngsinformationen über das Datenübertragungsnetz (20) steuerbar sind, und weiteren Netzkomponenten (13, 14) mit Sende- und Empfangsfunktion, wobei das Verfahren folgende Schritte umfasst: .
a) Senden von Daten mittels der primären Datensender (1 ... 9) in jeweils den primären Datensendern (1 ... 9) zugeordneten Sendezeitintervallen (24), wobei die Daten Kennungsinformationen zur Identifizierung der sie sendenden Datensender (1 ... 9) umfassen,
b) Zuordnen wenigstens eines primären Datensenders (1 ... 9) zu einem jeweiligen primären Datenempfänger (10, 11, 12), indem dem primären Datenempfänger (10, 11, 12) von einer zur Empfangsanforderung autorisierten Netzkomponente (14) Empfangsanforderungsinformationen übermittelt werden, welche zusätzlich zu einer Kennungsinformation zur Identifizierung des betreffenden primären Datensenders (1 ... 9) Informationen zur Einstellung wenigstens eines vom primären Datenempfänger (10, 11, 12) einzustellenden Datenübertragungsparameters enthalten, wobei die Informationen zur Einstellung des Datenübertragungsparameters oder zumindest Basisdaten zu ihrer Erstellung zuvor durch Messung des Istwertes des Datenübertragungsparameters während einer vorausgegangenen Datenübertragung von dem primären Datensender (1 ... 9) zu einem primären Datenempfänger von letzterem gewonnen und der zur Empfangsanforderung autorisierten Netzkomponente (14) über das Datenübertragungsnetz (20) übermittelt wurden,
c) Einstellen des Datenübertragungsparameters bei dem jeweiligen primären Datenempfänger (10, 11, 12), welchem die betreffenden Empfangsanforderungsinformationen gemäß Schritt b) übermittelt wurden und Aktivieren der Empfangsbereitschaft des primären Datenempfängers (10, 11, 12) mit der Einstellung des Datenübertragungsparameters in einem Empfangszeitintervall, das mit einem erwarteten folgenden Sendezeitintervall des zugeordneten primären Datensenders (1 ... 9) zusammenfällt, um Daten von dem primären Datensender (1 ... 9) zu empfangen, sowie Messen des Istwertes des Datenübertragungsparameters beim Datenempfang vom primären Datenempfänger (1 ... 9),
d) Übermittlung der von dem primären Datensender (1 ... 9) empfangenen Daten vom primären Datenempfänger (10, 11, 12) über das Datenübertragungsnetz (20) an eine zentrale Datensammelstation und Übermittlung des gemessenen Istwertes des Datenübertragungsparameters oder ggf. eines auf der Basis dieses Istwertes vom primären Empfänger (10, 11, 12) berechneten Einstellwertes des Datenübertragungsparameters vom primären Datenempfänger (10, 11, 12) zu der zur Empfangsanforderung autorisierten Netzkomponente (14) und
e) Erstellen von Empfangsanforderungsinformationen für eine etwaige neue Zuordnung des primären Datensenders (1 ... 9) zu einem primären Datenempfänger (10, 11, 12) durch die zur Empfangsanforderung autorisierte Netzkomponente (14) unter Berücksichtigung des Istwertes des Datenübertragungsparameters oder ggf. des auf der Basis des Istwertes berechneten Einstellwertes des Datenübertragungsparameters.

11. Verfahren nach Anspruch 10, wobei der Datenübertragungsparameter die Empfangszeit oder/und die Empfangsfrequenz oder/und die Empfangsfeldstärke oder/und ein Modulationsparameter beim Signalempfang des primären Datenempfängers vom primären Datensender ist.

12. Verfahren nach einem der Ansprüche 10 bis 11, wobei den primären Datenempfängern (10, 11, 12) Synchronisationssteuerungsinformationen zur gemeinsamen zeitlichen Synchronisation übermittelt werden.

13. Verfahren nach einem der Ansprüche 10 bis 12, wobei den primären Datenempfängern Frequenzabgleichssteuerungsinformationen zum Frequenzabgleich übermittelt werden.

14. Verfahren nach einem der Ansprüche 10 bis 13, wobei die zentrale Datensammelstation und die zur Empfangsanforderung autorisierte Netzkomponente (14) in einer Datenverarbeitungs- und Netzsteuerungsstation vereinigt sind, über welche das Kommunikationsmanagement des Datenübertragungsnetzes (20) einschließlich der Erstellung der Empfangsanforderungsinformationen und der Berechnung der Einstellwerte der Datenübertragungsparameter auf der Basis der von den primären Empfängern erhaltenen Istwertinformationen abgewickelt wird.

15. Verfahren nach einem der Ansprüche 10 bis 13, wobei die primären Datensender (1 ... 9) zur Übertragung von Verbrauchsmessdaten von Verbrauchsmessgeräten verwendet werden und das Datenübertragungssystem als Verbrauchsdatenerfassungssystem eingesetzt wird.

## Claims

1. A data-transmission system comprising a data-transmission network (26) with primary data transmitters (1...9) which are set up to send, in certain transmitting time intervals (24) corresponding to the time requirement by a respective separate time base, data including characteristic information for their identification, and
primary data receivers (10,11,12) which are associated with respective primary data transmitters (1...9) for receiving the data transmitted therefrom and are controlled in such a way that in each case in certain receiving time intervals (22), which are intended to coincide with the transmitting time intervals (22) [sic] of the primary data transmitters associated therewith, they are connected ready-to-receive, and wherein the primary data receivers (10,11,12) are further set up to relay data received from the primary data transmitters (1...9) or data derived therefrom to at least one further component (13) of the data-transmission network (20) so as to feed them directly through this further network component (13) or optionally in the course of transmission through additional network components of a central data-collection (14), wherein the receiving time scheme of a respective primary data receiver (10,11,12) and its association with data transmitters (1...9) can be varied by receiving request information from a network component (14) authorised for the receiving request,
**characterised in**
**that** the primary data receivers (10,11,12) are set up, according to the time requirement by a respective separate time base, to measure the respective time of reception of data from a relevant primary data transmitter (1...9) and to transmit the measured time information or time information derived therefrom in association with characteristic information of the primary data transmitter (1...9) via at least one transmission path of the data-transmission network (20) to a network component (14) authorised for the receiving request, and in that the network component (14) authorised for the receiving request is set up to bring about the transmission of such receiving request information to a respective primary data receiver (10,11,12), which in association with characteristic information of the primary data transmitter, from which the relevant primary data receiver (10,11,12) is to receive data, contains time information for determining the receiving time interval (22) which, with preceding transmission of data from the primary data transmitter (1...9) to a respective primary data receiver (10,11,12), are based on the time information measured by the latter or time information derived therefrom.

2. A data-transmission system according to Claim 1, wherein the data-transmission network (20) is a radio network.

3. A data-transmission system according to Claim 1, wherein the network component authorised for the receiving request is a central master component (13, 14) .

4. A data-transmission system according to Claims 1,2 or 3, wherein a network component (13) is set up to transmit synchronisation information so as to synchronise the timer of the primary data receiver (10, 11, 12) .

5. A data-transmission system according to Claims 1,2,3 or 4, wherein a network component is set up to transmit frequency equalising control information so as to synchronise the frequency generator of the primary data receiver.

6. A data-transmission system according to any one of the preceding Claims, wherein the primary data receiver (10,11,12) is set up to measure, in addition to the time of the data transmission from a primary data transmitter (1...9) to a relevant primary data receiver (10,11,12), at least one further data-transmission parameter used in the data transmission, and to transmit the measured information or information derived therefrom via at least one transmission path of the data-transmission network to a network component (14) authorised for the receiving request in association with characteristic information of the primary data transmitter (1...9), and in that the network component (14) authorised for the receiving request is set up to bring about the transmission of such receiving request information to a respective primary data receiver (10,11,12), which, in association with characteristic information of the primary data transmitter (1...9) from which the respective primary data receiver (10,11,12) is intended to receive data in accordance with the receiving request, contains information concerning the relevant data-transmission parameter which with preceding transmission of data from the primary data transmitter (1...9) to a respective primary data receiver (10,11,12) was measured by the latter, and in that the primary data receivers (10,11,12) are set up to evaluate the information obtained with the receiving request information via data-transmission parameters so as to adjust the respective data-transmission parameters.

7. A data-transmission system according to Claim 6, wherein the data-transmission parameter is the receiving frequency, the receiving field strength or a modulation parameter of the received signal.

8. A data-transmission system according to any one of the preceding Claims, wherein the primary data transmitters (1...9) are unidirectionally transmitting radio transmitters with a receiving function.

9. A data-transmission system according to any one of the preceding Claims, wherein it is a component of a consumption data acquisition system with a plurality of consumption measuring appliances, wherein the consumption measuring appliances are provided with the primary data transmitters (1...9) and wherein the primary data transmitters (1...9) are set up to transmit consumption measured data to their consumption measuring appliances.

10. A method of operating a data-transmission system, comprising a data-transmission network (20), in particular a radio network, with primary data transmitters (1...9) with a transmitting function, which can be controlled by means of control information via the data-transmission network (20), and further network components (13,14) with a transmitting function and receiving function, wherein the method comprises the following steps:
a) transmitting data by means of the primary data transmitters (1...9) in transmitting time intervals (24) respectively associated with the primary data transmitters (1...9), wherein the data comprise characteristic information for the identification of the data transmitters (1...9) transmitting them,
b) associating at least one primary data transmitter (1...9) with a respective primary data receiver (10,11,12) in that receiving request information is transmitted to the primary data receiver (10,11,12) by a network component (14) authorised for the receiving request, which receiving request information, in addition to characteristic information for the identification of the relevant data transmitter (1...9), includes information for setting at least one data-transmission parameter to be set by the primary data receiver (10,11,12), wherein the information for setting the data-transmission parameter or at least base data for its setting are obtained beforehand by measuring the actual value of the data-transmission parameter during a preceding data transmission from the primary data transmitter (1...9) to a primary data receiver from the latter and are transmitted to the network component (14) authorised for the receiving request via the data-transmission network (20),
c) setting the data-transmission parameter in the respective primary data receiver (10,11,12), to which the relevant receiving request information has been transmitted according to step b), and activating the receiving readiness of the primary data receiver (10,11,12) with the setting of the data-transmission parameter in a receiving time interval which coincides with an expected following transmitting time interval of the associated primary data transmitter (1...9) so as to receive data from the primary data transmitter (1...9), as well as measuring the actual value of the data-transmission parameter upon data reception from the primary data transmitter (1...9),
d) transmission of the data received from the primary data transmitter (1...9) from the primary data receiver (10,11,12) via the data-transmission network (20) to a central data collection station and transmission of the measured actual value of the data-transmission parameter, or optionally a setting value of the data-transmission parameter calculated on the basis of this actual value, from the primary data receiver (10,11,12) to the network component (14) authorised for the receiving request and
e) creating receiving request information for any new association of the primary data transmitter (1...9) with a primary data receiver (10,11,12) by the network component (14) authorised for the receiving request taking into account the actual value of the data-transmission parameter, or optionally the setting value of the data-transmission parameter calculated on the basis of the actual value.

11. A method according to Claim 10, wherein the data-transmission parameter is the receiving time and/or the receiving frequency and/or the receiving field strength and/or the modulation parameter upon signal reception of the primary data receiver from the primary data transmitter.

12. A method according to any one of Claims 10 to 11, wherein synchronisation control information for common time synchronisation is transmitted to the primary data receivers (10,11,12).

13. A method according to any one of Claims 10 to 12, wherein frequency equalising control information is transmitted to the primary data receivers for frequency equalisation.

14. A method according to any one of Claims 10 to 13, wherein the central data collection station and the network component (14) authorised for the receiving request are combined in a data processing and network control station, via which the communications management of the data-transmission network (20), including the creation of the receiving request information and the calculation of the setting values of the data-transmission parameters, are handled on the basis of the actual value information obtained from the primary receivers.

15. A method according to any one of Claims 10 to 13, wherein the primary data transmitters (1...9) are used to transmit consumption measured data from consumption measuring appliances and the data-transmission system is used as a consumption data acquisition system.

## Revendications

1. Système de transmission de données comportant un réseau de transmission de données (26) ayant des émetteurs de données primaires (1 ... 9) qui sont conçus pour émettre à des intervalles de temps d'émission déterminés (24) correspondant à la spécification de temps par le biais de leur propre base de temps des données y compris des informations d'identification servant à leur identification, et ayant des récepteurs de données primaires (10, 11, 12), qui sont affectés respectivement aux émetteurs de données primaires (1 ... 9) pour la réception des données émises par ces derniers et sont commandés de manière telle qu'ils soient mis en état de réception respectivement dans des intervalles de temps de réception déterminés (22) qui doivent coïncider avec les intervalles de temps d'émission (22) des émetteurs de données primaires leur ayant été affectés et, les récepteurs de données primaires (10, 11, 12) étant en outre conçus pour retransmettre des données reçues des émetteurs de données (1 ... 9) ou des données déduites de ces dernières données à au moins un autre composant (13) du réseau de transmission de données (20) afin de les diriger directement par le biais de cet autre composant de réseau (13) ou, le cas échéant au cours du transfert par le biais de composants de réseau supplémentaires, à une station centrale de collecte de données (14), le schéma des temps de réception d'un récepteur de données primaire respectif (10, 11, 12) et son affectation aux émetteurs de données (1 ... 9) pouvant être modifiés par des informations de demande de réception d'un composant de réseau autorisé à demander une réception (14),
**caractérisé en ce que**
les récepteurs de données primaires (10, 11, 12) sont conçus pour, mesurer, conformément à la spécification de temps, par le biais de leur propre base de temps, le temps respectif de la réception des données d'un émetteur de données primaire concerné (1 ... 9) et d'envoyer les informations de temps mesurées ou les informations de temps dérivées de ces dernières en correspondance aux informations d'identification de l'émetteur de données primaire (1 ... 9) par le biais d'au moins un chemin de transmission du réseau de transmission de données (20) à un composant de réseau (14) autorisé à demander une réception, et **en ce que** le composant de réseau (14) autorisé à demander une réception est conçu pour ordonner l'envoi à un récepteur de données primaire respectif (10, 11, 12) de telles informations de demande de réception qui, en correspondance aux informations d'identification de l'émetteur de données primaire, duquel le récepteur de données primaire concerné (10, 11, 12) doit recevoir des données, contiennent des informations de temps pour déterminer l'intervalle de temps de réception (22), qui reposent sur les informations de temps mesurées par un récepteur de données primaire respectif (10, 11, 12) lors de la transmission de données précédente de l'émetteur de données primaire (1 ... 9) au dit récepteur de données primaire respectif (10, 11, 12) ou sur des informations de temps déduites de ces dernières informations.

2. Système de transmission de données selon la revendication 1, le réseau de transmission de données (20) étant un réseau de radiocommunication.

3. Système de transmission de données selon la revendication 1 ou 2, le composant de réseau autorisé à demander une réception étant un composant maître central (13, 14).

4. Système de transmission de données selon la revendication 1, 2 ou 3, un composant de réseau (13) étant conçu pour émettre des informations de synchronisation afin de synchroniser les horloges du récepteur de données primaire (10, 11, 12).

5. Système de transmission de données selon la revendication 1, 2, 3 ou 4, un composant de réseau étant conçu pour émettre des informations de commande d'alignement de fréquences afin de synchroniser les générateurs de fréquence des récepteurs de données primaires.

6. Système de transmission de données selon l'une quelconque des revendications précédentes, les récepteurs de données primaires (10, 11, 12) étant conçus pour mesurer, en plus du temps de la transmission de données d'un émetteur de données primaire (1 ... 9) à un récepteur de données primaire concerné (10, 11, 12), au moins un autre paramètre de transmission de données employé lors de la transmission de données et pour envoyer les informations de mesure ou des informations déduites de ces dernières par le biais d'au moins un chemin de transmission du réseau de transmission de données à un composant de réseau (14) autorisé à demander une réception en correspondance aux informations d'identification de l'émetteur de données primaire (1 ... 9), et le composant de réseau autorisé à demander une réception (14) étant conçu pour ordonner l'envoi à un récepteur de données primaire respectif (10, 11, 12) de telles informations de demande de réception qui, en correspondance aux informations d'identification de l'émetteur de données primaire (1 ... 9), duquel le récepteur de données primaire concerné (10, 11, 12) doit recevoir des données selon la demande de réception, contiennent des informations sur le paramètre de transmission de données concerné, qui a été mesuré par un récepteur de données primaire respectif (10, 11, 12) lors de la transmission de données précédente de l'émetteur de données primaire (1 ... 9) au dit récepteur de données primaire respectif (10, 11, 12), et les récepteurs de données primaires (10, 11, 12) étant conçus pour évaluer les informations reçues avec les informations de demande de réception et concernant des paramètres de transmission de données pour le réglage des paramètres de transmission de données concernés.

7. Système de transmission de données selon la revendication 6, le paramètre de transmission de données étant la fréquence de réception, l'intensité du champ de réception ou un paramètre de modulation du signal reçu.

8. Système de transmission de données selon l'une quelconque des revendications précédentes, les émetteurs de données primaires (1 ... 9) étant des émetteurs radioélectriques à émission unidirectionnelle sans fonction de réception.

9. Système de transmission de données selon l'une quelconque des revendications précédentes, ledit système faisant partie d'un système de saisie de données de consommation ayant plusieurs appareils de mesure de consommation, les appareils de mesure de consommation étant équipés d'émetteurs de données primaires (1 ... 9) et les émetteurs de données primaires (1 ... 9) étant conçus pour émettre des données de mesure de consommation de leurs appareils de mesure de consommation.

10. Procédé pour exploiter un système de transmission de données, comportant un réseau de transmission de données (20), en particulier un réseau de radiocommunication, ayant des émetteurs de données primaires (1 ... 9), des récepteurs de données primaires (10, 11, 12) avec une fonction d'émission, qui peuvent être commandés au moyen d'informations de commande par le biais du réseau de transmission de données (20), et d'autres composants de réseau (13, 14) avec une fonction d'émission et de réception, le procédé comprenant les étapes suivantes à consistant à :
a) émettre des données au moyen des émetteurs de données primaires (1 ... 9) à des intervalles de temps d'émission (24) affectés respectivement aux émetteurs de données primaires (1 ... 9), les données comportant des informations d'identification servant à identifier les émetteurs de données (1 ... 9) les émettant,
b) affecter au moins un émetteur de données primaire (1 ... 9) à un récepteur de données primaire respectif (10, 11, 12) par le fait qu'un composant de réseau (14) autorisé pour demander une réception transmet au récepteur de données primaire (10, 11, 12) des informations de demande de réception qui contiennent, en plus d'une informations d'identification servant à identifier l'émetteur de données primaire concerné (1 ... 9), des informations pour régler au moins un paramètre de transmission de données à régler par le récepteur de données primaire (10, 11, 12),
les informations pour régler le paramètre de transmission de données ou au moins des données de base pour sa création ayant été acquises auparavant par un récepteur de données primaire par une mesure de la valeur réelle du paramètre de transmission de données durant une transmission de données précédente de l'émetteur de données primaire (1 ... 9) au dit récepteur de données primaire et ayant été transmises au composant de réseau (14) autorisé à demander une réception par le biais du réseau de transmission de données (20),
c) régler le paramètre de transmission de données au niveau du récepteur de données primaire respectif (10, 11, 12) auquel les informations de demande de réception concernées ont été transmises selon l'étape b) et activer la disponibilité de réception du récepteur de données primaire (10, 11, 12) avec le réglage du paramètre de transmission de données dans un intervalle de temps de réception qui coïncide avec un intervalle de temps d'émission suivant attendu de l'émetteur de données primaire affecté (1 ... 9) afin de recevoir des données de l'émetteur de données primaire (1 ... 9), ainsi que de mesurer la valeur réelle du paramètre de transmission de données lors de la réception des données du récepteur de données primaire (1 ... 9),
d) transmettre les données reçues par l'émetteur de données primaire (1 ... 9) du récepteur de données primaire (10, 11, 12) à une station centrale de collecte de - données par le biais du réseau de transmission de données (20) et transmettre la valeur réelle mesurée du paramètre de transmission de données ou, le cas échéant, une valeur de réglage du paramètre de transmission de données calculée sur la base de cette valeur réelle du récepteur primaire (10, 11, 12) du récepteur de données primaire (10, 11, 12) au composant de réseau (14) autorisé à demander une réception et
e) créer des informations de demande de réception pour une éventuelle nouvelle affectation de l'émetteur de données primaire (1 ... 9) à un récepteur de données primaire (10, 11, 12) par le composant de réseau autorisé à demander une réception (14) en tenant compte de la valeur réelle du paramètre de transmission de données ou, le cas échéant, de la valeur de réglage du paramètre de transmission de données calculée sur la base de la valeur réelle.

11. Procédé selon la revendication 10, le paramètre de transmission de données étant le temps de réception ou/et la fréquence de réception ou/et l'intensité du champ de réception ou/et un paramètre de modulation lors de la réception de signal du récepteur de données primaire par l'émetteur de données primaire.

12. Procédé selon l'une des revendications 10 à 11, des informations de commande de synchronisation étant transmises aux récepteurs de données primaire (10, 11, 12) en vue de la synchronisation temporelle commune.

13. Procédé selon l'une des revendications 10 à 12, des informations d'alignement de fréquences étant transmises aux récepteurs de données primaire en vue de l'alignement des fréquences.

14. Procédé selon l'une des revendications 10 à 13, la station centrale de collecte de données et le composant de réseau (14) autorisé à demander une réception étant réunis dans une station de traitement de données et de commande de réseau par le biais de laquelle la gestion des communications du réseau de transmission de données (20) y compris la création des informations de demande de réception et le calcul des valeurs de réglage des paramètres de transmission de données sont réalisés sur la base des informations de valeur réelle reçues des récepteurs primaires.

15. Procédé selon l'une des revendications 10 à 13, les émetteurs de données primaires (1 ... 9) sont employés pour transmettre des données de mesure de consommation d'appareils de mesure de consommation et le système de transmission de données est mis en oeuvre en tant que système de saisie de données de consommation.
